Europäisches Patentamt

European Patent Office

Office européen des brevets

(19)

(11) Numéro de publication : **0 014 618**
**B1**

(12)  **FASCICULE DE BREVET EUROPÉEN**

(45) Date de publication du fascicule du brevet :
15.12.82

(21) Numéro de dépôt : **80400100.6**

(22) Date de dépôt : **22.01.80**

(51) Int. Cl.³ : **G 02 B  7/26**

(54) **Dispositif joint tournant pour liaison par conducteurs optiques et son utilisation entre deux corps tournants.**

(30) Priorité : 07.02.79 FR 7903136

(43) Date de publication de la demande :
20.08.80 (Bulletin 80/17)

(45) Mention de la délivrance du brevet :
15.12.82 Bulletin 82/50

(84) Etats contractants désignés :
**CH DE GB IT NL SE**

(56) Documents cités :
**DE A 2 732 806**
**FR A 2 377 047**
**US A 3 922 063**
**US A 4 124 272**

(73) Titulaire : **THOMSON-CSF**
**173, Boulevard Haussmann**
**F-75379 Paris Cedex 08 (FR)**

(72) Inventeur : **Presslat, Robert**
**"THOMSON-CSF" - SCPI 173, bld Haussmann**
**F-75360 Paris Cedex 08 (FR)**
Inventeur : **de Corlieu, Guy**
**"THOMSON-CSF" - SCPI 173, bld Haussmann**
**F-75360 Paris Cedex 08 (FR)**
Inventeur : **Malard, Marcel**
**"THOMSON-CSF" - SCPI 173, bld Haussmann**
**F-75360 Paris Cedex 08 (FR)**
Inventeur : **d'Auria, Luigi**
**"THOMSON-CSF" - SCPI 173, bld Haussmann**
**F-75360 Paris Cedex 08 (FR)**

(74) Mandataire : **Trocellier, Roger et al**
**THOMSON-CSF SCPI 173, Bld Haussmann**
**F-75379 Paris Cedex 08 (FR)**

Jouve, 18, rue St-Denis, 75001 Paris, France

Dispositif joint tournant pour liaison par conducteurs optiques et son utilisation entre deux corps tournants

La présente invention concerne un dispositif joint tournant permettant une liaison par conducteurs optiques entre deux corps mécaniques tournant l'un par rapport à l'autre autour d'un axe commun de rotation.

L'invention est plus particulièrement envisagée pour assurer la transmission de signaux optiques avec une grande fiabilité, dans le cas d'une liaison monofibre. Néanmoins, le terme de conducteur optique est à considérer dans le sens général, incluant aussi bien la version monofibre que celle multifibre, c'est-à-dire à faisceaux de fibres optiques, à laquelle l'invention peut également s'appliquer.

Les fibres optiques sont généralement des conducteurs de faibles dimensions, par exemple 100 μm de diamètre extérieur et 50 μm pour le diamètre du cœur. D'autre part, le couplage optique entre les faces d'extrémité en regard des conducteurs à relier ne peut rester assuré de manière satisfaisante que si les jeux mécaniques, introduits au cours de la rotation relative des corps extérieurs, restent compatibles avec des tolérances fines prédéterminées en relation avec les dimensions des fibres. Ceci ne peut être obtenu aisément, surtout lorsque les corps mécaniques sont de grandes dimensions, ou bien nécessite un coût prohibitif par suite de la précision élevée d'usinage.

La présence de jeux mécaniques peut provoquer, au cours de chaque rotation, une variation du positionnement relatif des corps selon la direction axiale ; en outre, les axes mécaniques des deux corps peuvent ne pas rester coïncidants selon une direction commune de rotation et présenter une inclinaison relative (défaut de parallélisme) et/ou un décalage transversal (défaut de centrage). Ces variations, reportées au niveau des faces des conducteurs en regard, entraînent une dégradation correspondante du couplage optique.

Le dispositif joint tournant selon la présente invention, permet de remédier à ces inconvénients en préservant un positionnement précis des faces d'extrémité en regard et en assurant, un excellent couplage optique et une fiabilité élevée de la transmission.

Il est connu de réaliser des connecteurs pour conducteurs optiques dans lesquels les deux conducteurs peuvent tourner axialement l'un par rapport à l'autre et qui comportent, une partie mâle et une partie femelle tournant l'une dans l'autre par l'intermédiaire d'organes mécaniques de positionnement par exemple, des roulements à billes. Ces montages ne sont pas prévus pour constituer un joint tournant proprement dit et tenir compte de déplacements axiaux et de défauts de parallélisme ou de centrage pouvant se produire au cours de la rotation relative des deux corps extérieurs.

Selon l'invention, il est réalisé un dispositif joint tournant pour liaison par conducteurs optiques entre deux corps annexes tournant l'un par rapport à l'autre autour d'un axe de rotation, comportant un embout mâle terminé par une partie cylindrique et un embout femelle terminé par une partie alésée, les embouts étant couplés mécaniquement respectivement auxdits corps ainsi que pour tourner l'un dans l'autre autour de l'axe de rotation et étant aménagés pour recevoir axialement une extrémité de conducteur et en sorte que les faces d'extrémité correspondante des conducteurs se trouvent disposées parallèlement en regard et centrées sur l'axe, et étant caractérisé en ce que les diamètres de la partie cylindrique et de la partie alésée sont prédéterminés sensiblement de même valeur pour réaliser un ajustement incertain, autorisant la rotation ainsi qu'un déplacement axial relatif, les embouts étant aménagés pour réaliser un dispositif de butée mécanique délimitant ledit déplacement axial, un embout étant couplé rigidement à l'un des corps et l'autre embout étant couplé à l'autre corps selon un assemblage semi-rigide pour isoler le joint des variations de positionnement entre les deux corps en rotation engendré par des jeux mécaniques.

Les particularités et avantages d'un dispositif joint tournant conforme à la présente invention apparaîtront dans la description qui suit donnée à titre d'exemple non limitatif à l'aide des figures annexées qui représentent :

la figure 1, un exemple de réalisation avec demi-coupe axiale, d'un dispositif joint tournant selon l'invention ;

la figure 2, un schéma relatif aux cotes principales d'usinage ;

la figure 3, un schéma de détail d'un des couplages mécaniques aux corps extérieurs ;

les figures 4a et b, une variante de réalisation du couplage de la figure 3 ;

la figure 5, un schéma de détail d'une solution préférée pour le centrage des conducteurs optiques ;

la figure 6, un schéma partiel d'une variante de réalisation du joint tournant de la figure 1 ; et

la figure 7, un schéma simplifié d'une application d'un dispositif joint tournant conforme à l'invention.

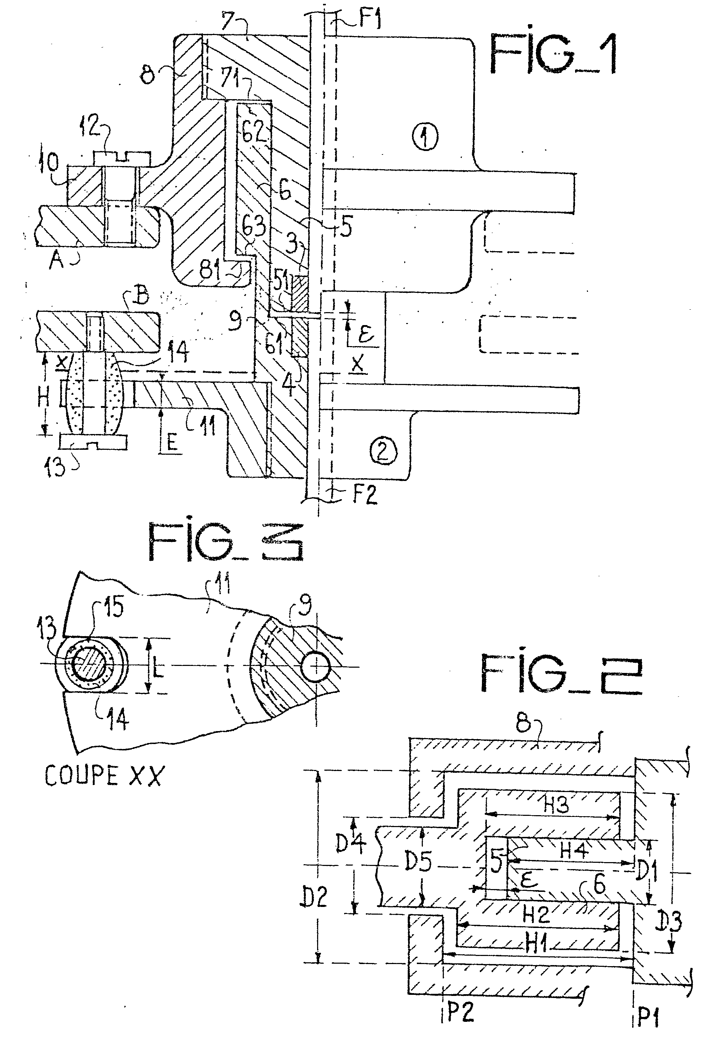

Le dispositif joint tournant représenté sur la figure 1 comporte une partie mâle 1 et une partie femelle 2 pouvant tourner l'une par rapport à l'autre autour d'un axe commun △ constituant l'axe de rotation des corps extérieurs A et B auxquels ces parties sont respectivement couplées. Chaque partie constitue un embout pour le conducteur optique qui lui est associé. Les conducteurs optiques F1 et F2 peuvent consister en une ou plusieurs fibres selon que la liaison est monofibre ou à faisceaux de fibres. Chacun des embouts 1 et 2 est évidé axialement pour recevoir le conducteur optique F1 et F2 correspondant et des moyens de centrage 3 et 4 sont prévus en extrémité des conducteurs pour centrer avec précision les faces d'extrémité des conducteurs sur l'axe Δ et selon un plan orthogonal à l'axe.

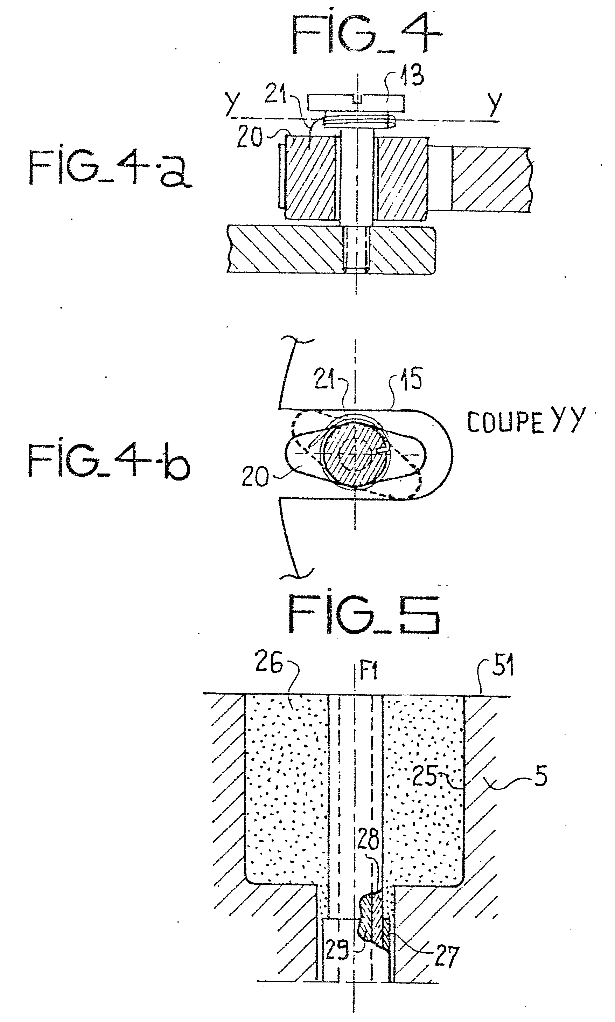

L'embout mâle 1 présente une partie cylindrique 5 d'extrémité ou arbre, l'embout femelle 2 se terminant par une partie alésée 6 de diamètre D1 (Fig. 2) correspondant pour réaliser un assemblage tournant avec des tolérances déterminées. L'usinage des surfaces cylindriques en contact est réalisé avec précision pour obtenir un ajustement dit incertain, c'est-à-dire dont la cote réelle de l'alésage peut être plus grande ou plus petite que la cote réelle de l'arbre ; il y a donc tantôt du jeu, tantôt du serrage, dans des plages de variation normalisées. Selon la qualité requise l'assemblage est réalisé glissant ou tournant ; pour une fabrication soignée par exemple, avec un alésage normal H7 on peut réaliser un assemblage tournant H7-f7, ou glissant H7-g6 ou glissant juste H7-h6. Le choix dépend essentiellement de la vitesse de rotation et des durées de fonctionnement continu envisagées.

Les faces d'extrémité des conducteurs F1 et F2 sont coplanaires avec les surfaces d'extrémité 51 de l'arbre 5 et 61 de la partie alésée 6 formant un manchon.

L'arbre 5 est terminé à son autre extrémité par une partie de plus fort diamètre 7 formant une embase avec une surface 71 sur laquelle peut venir buter la surface 62 qui termine le manchon 6. Les cotes axiales H3 et H4 des éléments 5 et 6 (fig. 2) sont déterminées telles que la distance ε entre les surfaces transversales 51 et 61, c'est-à-dire entre les faces parallèles et en regard des conducteurs F1 et F2, présente une valeur minimale εm prédéterminée, égale à H3-H4, pour la position en butée de la surface 62. Le dispositif joint tournant est aménagé pour présenter une deuxième position de butée axiale à laquelle correspond un interface εM maximal entre les conducteurs optiques. Le dispositif de butée correspondant est produit par une pièce 8 solidaire mécaniquement par vissage de l'embase 7 laquelle est filetée à cet effet. La pièce 8 présente une partie filetée correspondante pour l'assemblage, une partie évidée de diamètre intérieur D2 supérieur à celui D3 du manchon 6 et une partie terminale de diamètre intérieur D4 inférieur à D3 pour ménager un logement dans lequel peut se déplacer le manchon 6. La deuxième position de butée est obtenue lorsque les surfaces transversales représentées 63 et 81 des éléments 6 et 8 viennent en contact. Le manchon 6 est suivi d'une partie cylindrique ou fût 9 dont le diamètre D5 est inférieur au diamètre intérieur D4 de la partie terminale de la pièce 8. En appelant H2 la longueur axiale du manchon 6 et H1 celle de la cavité, la différence H1-H2 représente la plage totale Δε de déplacement axial relatif des embouts 1 et 2, l'interface maximal étant donné par εM = εm + Δε.

Le couplage mécanique des embouts 1 et 2 aux corps annexes A et B peut s'effectuer comme représenté au moyen de brides 10 et 11, l'un des couplages étant rigide et l'autre semi-rigide, ou élastique. Ainsi le joint tournant préserve le centrage des conducteurs F1 et F2 et leur couplage optique, en présence des déplacements axiaux et de défauts de parallélisme et de centrage présentés aux cours de la rotation entre les pièces A et B. L'une des brides, la bride 10 dans l'exemple figuré, est fixée rigidement par des vis 12 au corps A et est constituée par une partie usinée de la pièce 8. Les fixations 12 sont réparties régulièrement sur une circonférence ; la répartition peut comporter par exemple trois fixations à 120° l'une de l'autre. La bride 11 de l'embout femelle 2 est formée par une pièce vissée sur la partie latérale terminale filetée du fût 9, de manière à autoriser les montages préalables du manchon 6 sur l'arbre 5, puis le vissage de la pièce 8 sur l'embase 7. Le couplage semi-rigide au corps B est réalisé au moyen de vis 13 et de bagues 14 passant par des lumières 15 de dimension L supérieure au diamètre des bagues (détail fig. 3). Les bagues d'appui 14 sont en matériau rigide et à faible coefficient de frottement, en nylon dur par exemple. La hauteur H des bagues 14 est supérieure à l'épaisseur E de la bride 11 pour permettre des débattements axiaux entre les corps A et B. Les lumières ou fentes 15 sont également réparties sur une circonférence.

Il y a lieu de remarquer que le dispositif joint tournant est supporté par le corps extérieur auquel il est fixé rigidement, le corps A sur l'exemple figuré, étant entendu que les couplages peuvent être inversés. Dans le même concept, l'axe Δ peut avoir une position quelconque, verticale comme figurée, ou horizontale, ou autre.

Les couplages peuvent être réalisés de diverses manières, les figures 4a et 4b représentent une variante de réalisation du couplage semi-rigide. La bague s'y trouve remplacée par une pièce oblongue 20, de section elliptique, pouvant pivoter autour de la vis 13. Un ressort spiral 21 fixé d'une part à la vis 13 et d'autre part à la pièce 20 oblige cette dernière à venir s'appuyer sur les flancs de la fente 15. Ceci permet d'éviter les à-coups, notamment en cas de changement du sens de rotation, accélération ou décélération.

La figure 5 a trait à une réalisation préférentielle des moyens de centrage 3 et 4 des extrémités des conducteurs F1, F2. La pièce mécanique, l'arbre 5 par exemple, comporte un alésage 25 d'extrémité rempli d'un matériau 26 apte à présenter le phénomène de fluage, ce dernier étant défini comme une aptitude à la déformation analogue à celle d'un fluide visqueux soumis à une forte pression. Ce matériau peut être un métal (plomb, étain, antimoine), ou un plastique tel un polyamide ou un polycarbonate ou un polyfluorethène, de dureté inférieure à celle du verre constituant le conducteur. Une technique de centrage correspondante est décrite dans la demande de brevet français n° 76 13003 publiée sous le n° 2.349.843. Le conducteur F1 est dénudé dans sa partie terminale de son enveloppe plastique extérieure 27 pour laisser apparaître, dans le cas d'une fibre unique, la gaine 28 entourant le cœur 29. Après fluage et durcissement, l'extrémité de la fibre se trouve parfaitement centrée et est usinée pour être rendue coplanaire avec la surface 51 et présenter un poli optique. Le durcissement peut être obtenu par refroidissement du matériau préalablement chauffé (cas des métaux) ou par action thermique finale (cas des plastiques).

Selon un mode préférentiel de réalisation, le dispositif joint tournant est aménagé pour comporter des moyens de lubrification facilitant la rotation des pièces et ménageant l'usure due aux frottements, le liquide utilisé étant choisi en fonction de son indice de réfraction afin de ne pas perturber la liaison optique dans la partie interface entre les conducteurs.

D'autre part, des moyens mécaniques sont prévus pour exercer une pression axiale en sorte que le manchon vienne en butée sur l'embase 7 et que le jeu d'interface présente la valeur minimale εm. La figure 6 donne un exemple d'amménagement correspondant. Le liquide 30 est un lubrifiant et un adaptateur d'indice, introduit au préalable et pouvant être : de la glycérine, eucalyptol, huile de cèdre, huiles d'immersion diverses, monobromure de naplital, etc... les aménagements mécaniques comportent des joints d'étanchéité 31, 32, un ressort 33 et une rondelle 34. La partie terminale de la pièce 8 formant butée d'appui pour le ressort est constituée par un élément fileté rapporté 35. La compression du ressort 33 exerce une pression sur la surface 63 et le manchon 6 est entraîné en butée, la surface 62 venant en contact avec la surface 71 de l'ambase 7. La circulation du fluide 30 peut s'exercer par capillarité ou peut être facilitée au moyen de rainures formant conduits et usinées à cet effet sur les surfaces en contact des éléments 5 et 6.

Le schéma figure 7 illustre un exemple d'application. Le corps B est fixe et le corps A entraîné en rotation autour de l'axe Δ. Les moyens de liaison sont symbolisés par des roulements 40. Un émetteur optique est installé dans la structure A comportant des moyens générateurs de données 41, un amplificateur 42, une diode photoémissive 43 et un connecteur 44 à la fibre F1. Dans la structure B, la fibre F2 est connectée par un connecteur 45 à un récepteur groupant par exemple une diode photodétectrice 46, un amplificateur 47, un comparateur à seuil 48 et des moyens de traitement et d'exploitation des données 49. Le joint tournant 1-2 permet, conformément à l'invention, d'affranchir mécaniquement le positionnement d'interface des conducteurs des effets résultant des jeux mécaniques dans les structures externes, A, B et 40 lors de la rotation, ces effets pouvant se traduire par des déplacements relatifs axiaux, transversaux à l'axe, ou angulaire comme il a été détaillé précédemment. Il est entendu que les dimensions de la bride 11, notamment son épaisseur E (fig. 1) et la largeur L des lumières (fig. 3) sont déterminées en relation avec les dimensions des éléments de fixation et d'appui 13, 14 et en tenant compte des amplitudes des mouvements relatifs présentés entre les pièces A et B au cours de la rotation, notamment du mouvement relatif axial.

## Revendications

1. Dispositif joint tournant pour liaison par conducteurs optiques entre deux corps annexes tournant l'un par rapport à l'autre autour d'un axe de rotation, comportant un embout mâle terminé par une partie cylindrique et un embout femelle terminé par une partie alésée, les embouts étant couplés mécaniquement respectivement auxdits corps ainsi que pour tourner l'un dans l'autre autour de l'axe de rotation et étant aménagés pour recevoir axialement une extrémité de conducteur et en sorte que les faces d'extrémité correspondante des conducteurs se trouvent disposées parallèlement en regard et centrées sur l'axe, et étant caractérisé en ce que les diamètres de la partie cylindrique (5) et de la partie alésée (6) sont prédéterminés sensiblement de même valeur (D1) pour réaliser un ajustement incertain, autorisant la rotation ainsi qu'un déplacement axial relatif, les embouts (1, 2) étant aménagés pour réaliser un dispositif de butée mécanique (7, 8) délimitant ledit déplacement axial (Δε), un embout (1) étant couplé rigidement (10, 12) à l'un des corps (A) et l'autre embout (2) étant couplé à l'autre corps (B) selon un assemblage semi-rigide (13, 14) pour isoler le joint des variations de positionnement entre les deux corps en rotation engendrées par des jeux mécaniques.

2. Dispositif selon la revendication 1, caractérisé en ce que le dispositif de butée mécanique (7, 8) présente deux surfaces (71, 81) transverses à l'axe sur lesquelles peuvent venir buter respectivement deux surfaces transversales (62, 63) de la partie alésée (6) formant manchon, les côtes axiales (H1, H2) entre ces surfaces étant déterminées pour produire un interface (ε) entre les faces en regard des conducteurs compris entre une valeur minimale (Δm) et une valeur maximale (ΔM) prédéterminées.

3. Dispositif selon l'une quelconque des revendications 1 et 2, caractérisé en ce que chaque embout comporte des moyens de centrage (3, 4) des extrémités de conducteurs (F1, F2) sous forme d'une partie alésée (25) rempli d'un matériau (26) présentant le phénomène de fluage.

4. Dispositif selon l'une quelconque des revendications 1 à 3, caractérisé en ce que le dispositif de butée comporte des moyens élastiques (33) pour exercer une pression sur le manchon que forme la partie alésée et l'amener en position de butée correspondant à l'interface minimal entre conducteurs.

5. Dispositif selon l'une quelconque des revendications 1 à 4 caractérisé en ce qu'il comporte des moyens de lubrification des surfaces en contact au cours de la rotation, utilisant un liquide (30) d'indice de réfraction adapté au coulage optique dans l'interface, et des éléments d'étanchéité (31, 32).

6. Dispositif selon l'une quelconque des revendications 1 à 5, caractérisé en ce que chaque embout comporte une bride (10, 11) couplée mécaniquement au corps associé (A, B) par les éléments de fixation (12, 13) ainsi que des éléments d'appui (14, 20) dans le cas du couplage semi-rigide, la bride relative au couplage semi-rigide comportant des évidements (15) de dimensions déterminées (L, E) pour permettre des déplacements axiaux et transversaux des éléments de fixation et d'appui correspondants solidaires du corps associé.

7. Dispositif selon la revendication 6, caractérisé en ce que les éléments de fixation sont constitués par des vis (12, 13) réparties régulièrement sur les brides, et les éléments d'appui par des bagues (14) montées sur les vis correspondantes.

8. Dispositif selon la revendication 6, caractérisé en ce que les éléments de fixation sont constitués par des vis (12, 13) réparties régulièrement sur les brides, et les éléments d'appui par des pièces oblongues (20) montées sur les vis correspondantes et sollicitées par ressort de rappel (21) pour prendre appui sur les évidements de la bride correspondante.

9. Dispositif selon l'ensemble des revendications 1, 2, 3, 6 ou selon cet ensemble et l'une quelconque des revendications 4, 5, 7, 8, caractérisé en ce que l'embout mâle (1) comporte la partie cylindrique (5) terminée à une extrémité par une embase (7) pour constituer une première surface de butée (71), l'embase étant filetée latéralement pour être assemblée à une pièce (8) qui présente la deuxième surface de butée (81) et qui forme par ailleurs une première bride de couplage (10), l'embout femelle (2) comporte un fût (9) prolongé par le manchon (6) et fileté sur une partie latérale pour être assemblé à une pièce (11) formant la deuxième bride de couplage.

10. Utilisation d'un dispositif selon l'une quelconque des revendications 1 à 9, pour réaliser une transmission optique (F1, F2) entre deux corps (A, B) tournants, la transmission s'effectuant par liaison monofibre ou multifibre, caractérisée en ce que l'un des corps (A) est équipé avec des moyens de photoémission (41, 42, 43) de signaux lumineux à une extrémité (44) d'un premier conducteur optique (F1) relié par son autre extrémité à un embout (1) du dispositif joint tournant, le deuxième corps (B) étant équipé de moyens de photoréception (46 à 49) des signaux lumineux recueillis à une extrémité d'un deuxième conducteur optique (F2) relié au deuxième embout (2) du dispositif joint tournant par son autre extrémité.

## Claims

1. Rotary joint device for optic conductor connection between two associated bodies rotating one with respect to the other about a rotational axis, comprising a male end piece terminating by a cylindrical part and a female end piece terminating by a recessed part, these pieces being respectively mechanically coupled to said bodies for rotation one within the other about the rotational axis, and being arranged for axially receiving one conductor and in such a manner that the corresponding end faces of the conductors are in parallel facing positions and centered on the axis, and being characterized in that the diameters of the cylindrical part (5) and the recessed part (6) are predetermined to have substantially the same value (D1) to form an uncertain ajustment allowing relative rotation and axial displacement, the end pieces (1, 2) being arranged to form a mechanic abutment device (7, 8) limiting said axial displacement ($\triangle\varepsilon$), one end piece (1) being rigidly coupled (10, 12) to one of said bodies (A) and the other end piece (2) being coupled to the other body (B) by a semi-rigid assembly (13, 14) to insulate the joint from positional variations between the two bodies during rotation thereof, caused by mechanic clearance.

2. Device in accordance with claim 1, characterized in that the mechanic abutment device (7, 8) has two surfaces (71, 81) which are transverse to the axis and against which two transverse surfaces (62, 63) of the recessed part (6) forming a sleeve may abut, the axial dimensions (H1, H2) between these surfaces being determined to produce an interface ($\varepsilon$) between the facing faces of the conductors comprised between predetermined minimum ($\triangle m$) and maximum ($\triangle M$) values.

3. Device in accordance with any of claims 1 and 2, characterized in that each end piece comprises means (3, 4) for centering the ends of the conductors (F1, F2), formed by a recessed part (25) filled with a flowable material (26).

4. Device in accordance with any of claims 1 to 3, characterized in that the abutment device comprises resilient means (33) for urging the sleeve formed by the recessed part into an abutment position corresponding to a minimum interface between the conductors.

5. Device in accordance with any of claims 1 to 4, characterized in that it comprises lubrification means for lubrification of the surfaces contacting during rotation, using a liquid (30) having an index of refraction adapted to the optic coupling in the interface, as well as sealing members (31, 32).

6. Device in accordance with any of claims 1 to 5, characterized in that each end piece comprises a flange (10, 11) mechanically coupled to the associated body (A, B) by fixing members (12, 13) as well as mounting members (14, 20) in the case of the semi-rigid coupling, the flange associated with the semi-rigid coupling comprising recesses (15) of predetermined dimensions (L, E) allowing axial and transverse movements of the corresponding mounting and fixing members secured on the associated body.

7. Device in accordance with claim 6, characterized in that the fixing members are formed by screws (12, 13) regularly spaced on the flanges, and the mounting members are formed by rings (14) mounted on corresponding screws.

8. Device in accordance with claim 6, characterized in that the fixing members are formed by screws (12, 13) regularly spaced on the flanges, and the mounting members are formed by oblong pieces (20) mounted on corresponding screws and urged by a return spring (21) to bear against the recesses of the corresponding flange.

9. Device in accordance with the entirety of claims 1, 2, 3, 6 or in accordance with this entirety and any of claims 4, 5, 7 and 8, characterized in that the male end piece (1) comprises the cylindrical part (5) terminating at one end by a base member (7) to form a first abutment surface (71), said base member being laterally threaded to be assembled with a member (8) forming the second abutment surface (81) and further forming a first coupling flange (10), the female end piece (2) comprising a shank (9) extended by the sleeve (6) and threaded on a lateral part to be assembled with a member (11) forming the second coupling flange.

10. The use of a device in accordance with any of claims 1 to 9, to form an optic transmission (F1, F2) between two rotary bodies (A, B), the transmission being made by monofiber or multifiber connection, characterized in that one of the bodies (A) is equipped with photo-emitter means (41, 42, 43) for the emission of light signals at one end (44) of a first optic conductor (F1) connected to one of the end pieces (1) of the rotary joint device on its other end, the second body (2) being equipped with photo-reception means (46 to 49) for reception of the light signals received at one end of a second optic conductor (F2) connected to the second end piece (2) of the rotary joint device on its other end.

**Ansprüche**

1. Drehverbindungsvorrichtung zur Verbindung zweier zueinander gehörender Körper, die in bezug aufeinander um eine Rotationsachse drehbar sind, durch Lichtleiter, mit einem Einsteckteil, das in einem zylindrischen Teil endet, und einem Aufnahmeteil, das in einer Aussparung endet, wobei Einsteck- und Aufnahmeteil jeweils mechanisch mit den Körpern gekoppelt, ineinander um die Rotationsachse drehbar und so ausgestaltet sind, daß sie ein Leiterende axial aufnehmen und die entsprechenden Endflächen der Leiter parallel einander gegenüber und auf der Achse zentriert angeordnet sind, dadurch gekennzeichnet, daß die Durchmesser des zylindrischen Teils (5) und der Aussparung (6) im wesentlichen auf denselben Wert (D1) vorbestimmt sind, um eine Einpassung mit Spiel herzustellen, die sowohl eine Relativdrehung als auch eine relative Axialverschiebung zuläßt, wobei Einsteck- und Aufnahmeteil (1, 2) so ausgebildet sind, daß sie eine mechanische Anschlagvorrichtung (7, 8) bilden, welche die Axialverschiebung ($\triangle\varepsilon$) begrenzt, wobei von dem Einsteck- und dem Aufnahmeteil eines (1) starr (10, 12) an einen der Körper (A) angekoppelt und das andere (2) an den anderen Körper (B) durch eine halbstarre Montage (13, 14) angekoppelt ist, um die Verbindung von Positionierungsänderungen zwischen den beiden Körpern während deren Drehung, die durch mechanisches Spiel erzeugt werden, fernzuhalten.

2. Vorrichtung nach Anspruch 1, dadurch gekennzeichnet, daß die mechanische Anschlagvorrichtung (7, 8) zwei zu der Achse transversale Oberflächen (71, 81) aufweist, gegen die jeweils eine von zwei transversalen Oberflächen (62, 63) der eine Buchse bildenden Aussparung (6) anstoßen können, wobei dei Axialmaße (H1, H2) zwischen diesen Oberflächen so bestimmt sind, daß eine Grenzzone ($\varepsilon$) zwischen den einander gegenüberliegenden Flächen der Leiter gebildet wird, die zwischen einem vorbestimmten Minimalwert ($\triangle m$) und einem vorbestimmten Maximalwert ($\triangle M$) liegt.

3. Vorrichtung nach Anspruch 1 oder 2, dadurch gekennzeichnet, daß das Einsteck- und das Aufnahmeteil Zentriermittel (3, 4) zum Zentrieren der Leiterenden (F1, F2) in Form einer Aussparung (25) aufweisen, die durch ein fließfähiges Material (26) ausgefüllt ist.

4. Vorrichtung nach einem der Ansprüche 1 bis 3, dadurch gekennzeichnet, daß die Anschlagvorrichtung elastische Mittel (33) umfaßt, um auf die durch die Aussparung gebildete Buchse einen Druck auszuüben und sie in eine Anschlaglage zu bringen, die einer minimalen Grenzzone zwischen den Leitern entspricht.

5. Vorrichtung nach einem der Ansprüche 1 bis 4, dadurch gekennzeichnet, daß sie Schmiermittel zur Schmieren der Oberflächen umfaßt, die während der Drehung miteinander in Berührung sind, unter Verwendung einer Flüssigkeit (30), deren Brechungsindex an die optische Kopplung in der Grenzzone angepaßt ist, und unter Verwendung von Dichtungselementen (31, 32).

6. Vorrichtung nach einem der Ansprüche 1 bis 5, dadurch gekennzeichnet, daß das Einsteck- und das Aufnahmeteil jeweils einen Flansch (10, 11) aufweisen, der mechanisch an den zugeordneten Körper (A, B) durch Befestigungselemente (12, 13) angekoppelt ist, und für die halbstarre Kopplung Stützelemente (14, 20) aufweist, wobei der die halbstarre Kopplung betreffende Flansch Aussparungen (15) vorbestimmter Abmessungen (L, E) aufweist, um axiale und transversale Bewegungen der entsprechenden Befestigungselemente und Stützelemente zuzulassen, die mit dem zugeordneten Körper fest verbunden sind.

7. Vorrichtung nach Anspruch 6, dadurch gekennzeichnet, daß die Befestigungselemente durch Schrauben (12, 13) gebildet sind, die regelmäßig über die Flansche verteilt sind, während die Stützelemente durch Ringe (14) gebildet sind, die auf die entsprechenden Schrauben aufgesetzt sind.

8. Vorrichtung nach Anspruch 6, dadurch gekennzeichnet, daß die Befestigungselemente durch Schrauben (12, 13) gebildet sind, die auf den Flanschen regelmäßig verteilt sind, und die Stützelemente durch langgestreckte Teile (20) gebildet sind, die auf die entsprechenden Schrauben aufgesetzt und durch eine Rückholfeder (21) belastet sind, um sich gegen die Aussparungen des entsprechenden Flansches abzustützen.

9. Vorrichtung nach der Gesamtheit der Ansprüche 1, 2, 3, 6 oder nach der Gesamtheit dieser Ansprüche und einem der Ansprüche 4, 5, 7 und 8, dadurch gekennzeichnet, daß das Einsteckteil (1) einen zylindrischen Teil (5) aufweist, der an einem Ende mit einem Sockel (7) abschließt, um eine erste Anschlagoberfläche (71) zu bilden, wobei dieser Sockel auf seiner Seite mit einem Gewinde versehen ist, um ihn mit einem Teil (8) zusammenzusetzen, welches die zweite Anschlagoberfläche (81) aufweist und im übrigen einen ersten Koppelflansch (10) bildet, wobei das Aufnahmeteil (2) einen Schaft (9) aufweist, der durch die Buchse (6) verlängert und auf einem seitlichen Teil mit Gewinde versehen ist, um mit einem Teil (11) zusammengesetzt zu werden, welches den zweiten Koppelflansch bildet.

10. Verwendung einer Vorrichtung nach einem der Ansprüche 1 bis 9, zur Herstellung einer optischen Übertragung (F1, F2) zwischen zwei rotierenden Körpern (A, B), wobei die Übertragung über eine Monofaser- oder Multifaser-Verbindung erfolgt, dadurch gekennzeichnet, daß einer der Körper (A) mit Photoemissionseinrichtungen (41, 42, 43) zum Aussenden von Lichtsignalen an einem Ende (44) eines ersten Lichtleiters (F1) ausgerüstet ist, der an seinem anderen Ende mit einem Teil (1) der Drehverbindungsvorrichtung verbunden ist, wobei der zweite Körper (B) mit Photoempfängereinrichtungen (46 bis 49) zum Empfangen der Lichtsignale ausgerüstet ist, die an einem Ende eines zweiten Lichtleiters (F2) abgenommen werden, der an seinem anderen Ende mit dem zweiten Teil (2) der Drehverbindungsvorrichtung verbunden ist.

0 014 618

FIG_1

FIG_3

COUPE XX

FIG_2

# FIG_4

## FIG_4-a

## FIG_4-b

COUPE YY

# FIG_5

2